# EUROPÄISCHE PATENTSCHRIFT

(11) **EP 0 827 645 B1**
(45) Veröffentlichungstag und Bekanntmachung des Hinweises auf die Patenterteilung: **30.08.2006**
(21) Anmeldenummer: 97916316.9
(22) Anmeldetag: 27.02.1997
(51) Int. Cl.: H04B 1/12, G08C 25/00

(54) **Einrichtung in einem Kraftfahrzeug zur Übertragung von mit Hilfe eines Sensors erzeugten Signalen**
Device in a motor vehicle for transmitting signals produced by a sensor
Dispositif permettant la transmission de signaux générés par détecteur dans un véhicule automobile

(30) Priorität: 23.03.1996 DE 19611503
(43) Veröffentlichungstag der Anmeldung: 11.03.1998
(73) Patentinhaber: ROBERT BOSCH GMBH, 70442 Stuttgart (DE)
(72) Erfinder: JÜLIGER, Peter, D-76761 Rülzheim (DE)
(86) Internationale Anmeldenummer: PCT/DE1997/000346
(87) Internationale Veröffentlichungsnummer: WO 1997/036379

(56) Entgegenhaltungen:
- DE-A- 3 224 768
- DE-A- 4 222 475
- US-A- 3 906 384
- US-A- 5 450 008

## Beschreibung

### Stand der Technik

In der Kraftfahrzeugtechnik werden heutzutage eine Vielzahl von Regelungs- bzw. Steuerungssystemen eingesetzt. Bei vielen dieser Systeme ist es erforderlich, verschiedene physikalische Größen mittels Sensierung zu erfassen und dem entsprechenden Steuergerät zuzuführen. Beispielsweise sei hier die Erfassung der Öltemperatur im Getriebe bei der Getriebesteuerung genannt.

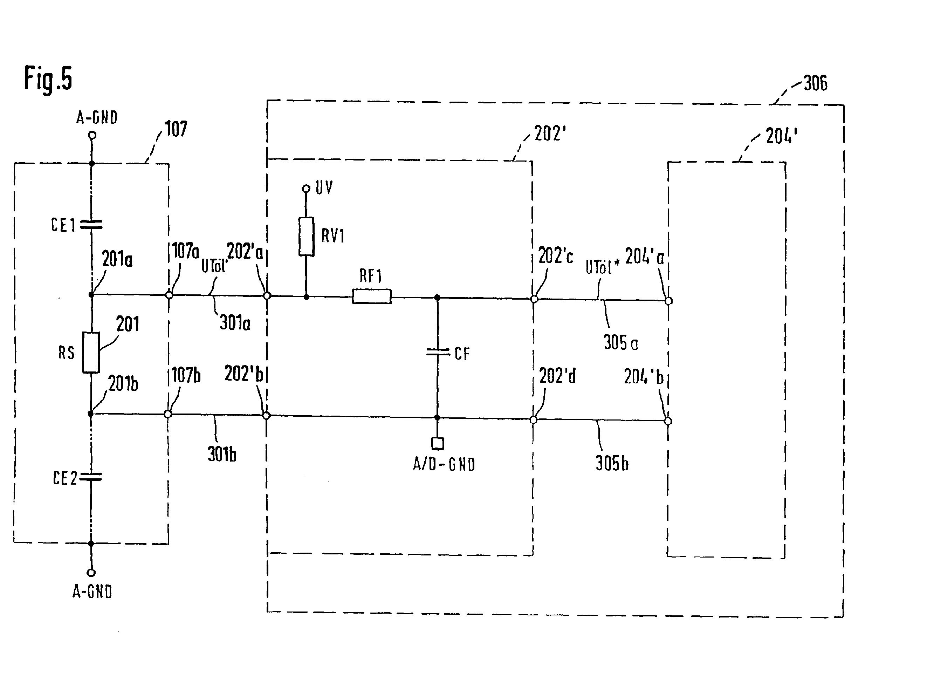

Figur 5 zeigt eine zum Stand der Technik gehörende Schaltungsanordnung, mit der bei der Getriebesteuerung das vom Temperatursensor erzeugte Signal, welches in diesem Fall die Temperatur des Öles im Getriebe repräsentiert, mittels zweier Signalleitungen zum Steuergerät übertragen wird. Hierzu ist im Getriebe (107) ein Sensormittel (201) angebracht, welches über eine erste Signalleitung (301a) und eine zweite Signalleitung (301b) mit einer in einem Steuergerät (306) enthaltenen Eingangsschaltung (202') verbunden ist. Mit der ersten Signalleitung wird das vom Sensormittel erzeugte Signal UTöl' übertragen. Über die zweite Signalleitung ist das Sensormittel mit der Masse A/D-GND des Steuergerätes verbunden. Die Eingangsschaltung besteht aus einem Bauelement (RV1), welches als Vorwiderstand eingesetzt ist, sowie aus einem Filter, welches aus den Bauelementen RF1 und CF aufgebaut ist. Die Eingangsschaltung ist über eine erste Signalleitung (305a) und über eine zweite Signalleitung (305b) mit einem Mikrocontroller (204') verbunden. Mit der ersten Signalleitung wird das Signal UTöl* zum Mikrocontroller übertragen. Die zweite Signalleitung verbindet den Mikrocontroller mit der Masse A/D-GND.

Da das Getriebe und das Steuergerät im Fahrzeug räumlich voneinander getrennt angeordnet sind, müssen die Signalleitungen außerhalb des Steuergerätes verlegt werden. Dadurch können unter Umständen auf beiden Signalleitungen Störsignale eingekoppelt werden.

Aus der DE-OS 42 22 475 ist eine Anordnung zum Ausblenden von Störsignalen auf Signalleitungen bekannt. In einem ersten Ausführungsbeispiel wird eine Anordnung, die bei der Übertragung von analogen Signalen eingesetzt werden kann, vorgestellt. Hierbei wird das Originalsignal auf einer ersten Signalleitung und die zeitliche Ableitung des Originalsignals auf einer zweiten Signalleitung übertragen. Auf der Empfangsseite wird das auf der zweiten Signalleitung übertragene abgeleitete Signal mit Hilfe eines Integrators integriert. Auf dieses Integrationssignal und auf das auf der ersten Signalleitung übertragene Originalsignal wird eine analoge UND-Verknüpfung angewendet. Dadurch werden die auf der Übertragungsstrecke eingekoppelten Störsignale eliminiert. In einem zweiten Ausführungsbeispiel wird eine Anordnung vorgestellt, die bei der Übertragung von digitalen Signalen verwendet werden kann. Hierzu wird das Originalsignal auf einer ersten Signalleitung und das invertierte Originalsignal auf einer zweiten Signalleitung übertragen. Auf der Empfangsseite werden beide Signale mit Hilfe jeweils einer Digitalisierstufe digitalisiert. Somit liegen auch die eingekoppelten Störungen digitalisiert vor. Das digitalisierte Signal des auf der zweiten Signalleitung übertragenen invertierten Originalsignals wird auf der Empfangsseite nochmals invertiert. Auf dieses Signal und auf das digitalisierte Signal des auf der ersten Signalleitung übertragenen Originalsignal wird eine logische UND-Verknüpfung angewendet. Dadurch werden die auf der Übertragungsstrecke eingekoppelten Störsignale eliminiert.

Die Anordnungen des ersten bzw. des zweiten Ausführungsbeispieles haben den Nachteil, daß zum einen sehr präzise arbeitende Komponenten und zum anderen sehr gut aufeinander abgestimmte Komponenten verwendet werden müssen. Wenn dies nicht der Fall ist, können im Nutzsignal immer noch Anteile des Störsignals enthalten sein.

In der US-PS 3,906,384 ist eine Anordnung beschrieben, mit der Störsignale, die während der Verarbeitung des Nutzsignales in Verarbeitungskomponenten diesem überlagert werden, eliminiert werden. In einem Ausführungsbeispiel wird eine Anordnung vorgestellt, bei der das Nutzsignal zum einen unverändert auf erste Verarbeitungskomponenten und zum anderen invertiert auf zweite Verarbeitungskomponenten gegeben wird. Unter der Voraussetzung, die ersten und die zweiten Verarbeitungskomponenten seien identisch, dann sind den nach der Bearbeitung durch die Verarbeitungskomponenten vorliegenden Signalen dieselben Störungen überlagert. Die nach der Bearbeitung durch die Verarbeitungskomponenten vorliegenden Signale werden beide auf einen Subtrahierer gegeben. Dadurch werden die durch die Verarbeitungskomponenten hervorgerufenen Störungen eliminiert.

Diese Anordnung weist jedoch folgende Nachteile auf: Zum einen ist die Realisierung aufgrund der doppelt erforderlichen Verarbeitungskomponenten aufwendig. Zum anderen müssen die Verarbeitungskomponenten sehr gut aufeinander abgestimmt sein, da nur für den Fall identisch erzeugter Störsignale, diese eliminiert werden können. Zusätzlich wird der Signalpegel des Nutzsignals durch diese Anordnung verdoppelt.

In dem Dokument US 5450008 ist eine Einrichtung beschrieben, die, um die Geschwindigkeit zu messen, einen induktiven magnetischen Sensor benutzt. Die Messung wird durch zwei Leitungen übertragen.

Die Aufgabe der vorliegenden Erfindung besteht darin, die Eliminierung von bei der Übertragung von Signalen auf den Signalleitungen eingekoppelten Störsignalen zu verbessern.

Diese Aufgabe wird durch die im Anspruch 1 bzw. 2 aufgezeigten Merkmale gelöst.

### Vorteile der Erfindung:

Der Vorteil der Erfindung gegenüber dem eingangs genannten Stand der Technik, ist der, daß die Eliminierung von bei der Übertragung von Sensorsignalen auf den Signalleitungen eingekoppelten Störsignalen verbessert wird.

Weitere Vorteile der Erfindung ergeben sich aus einem Vergleich der erfindungsgemäßen Schaltungsanordnung des ersten Ausführungsbeispiels (Figur 3) mit der in der DE-OS 42 22 475 beschriebenen Anordnung bzw. mit der in der US-PS 3,906,384 beschriebenen Anordnung. Der Vergleich zeigt, daß für die erfindungsgemäße Schaltungsanordnung weniger Bauelemente als für die zum Stand der Technik gehörenden Anordnungen benötigt werden, um die Eliminierung der Störsignale realisieren zu können.

Ein weiterer Vorteil der erfindungsgemäßen Schaltungsanordnung des ersten Ausführungsbeispiels ergibt sich aus dem Spannungsteiler, der aus dem Bauelement RV1, dem Sensormittel 201 und dem Bauelement RV2 aufgebaut ist. Durch den Einsatz dieses Spannungsteilers werden die Signale phi1' bzw. phi2', die zur weiteren Verarbeitung mit einem Mikrocontroller jeweils einem A/D-Wandler zugeführt werden müssen, zu solchen Spannungs- bzw. Potentialwerten hin verschoben, die für die durch den A/D-Wandler stattfindende Bearbeitung von Vorteil ist. Da die Signale phi1' bzw. phi2' somit nicht mehr am Rand des Meßbereichs des jeweiligen A/D-Wandlers liegen, wird die Wandlung der Signale phi1' bzw. phi2' durch den jeweiligen A/D-Wandler präziser und der Störabstand größer. Gleichzeitig können aufgrund der Verwendung des Spannungsteilers und der damit verbundenen Verschiebung der Signale phi1' bzw. phi2', aus diesen Signalen leichter die Nutzsignale herausgefiltert werden.

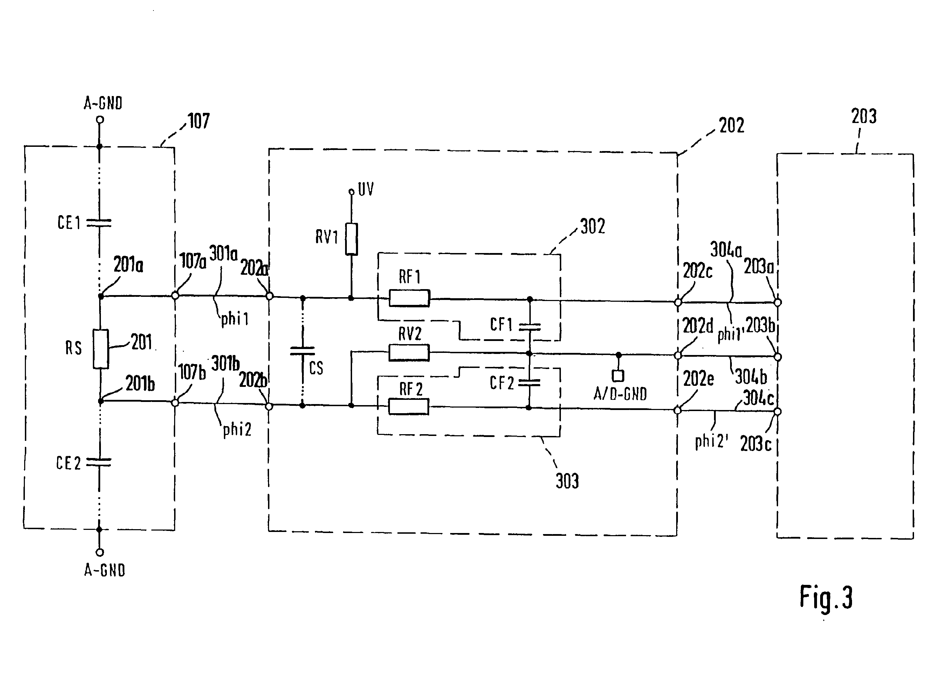

Die erfindungsgemäße Schaltungsanordnung nach Figur 3 hat gegenüber der zum Stand der Technik gehörenden Schaltungsanordnung (Figur 5) zwei weitere Vorteile.

Zum einen bietet die erfindungsgemäße Schaltungsanordnung eine Diagnosemöglichkeit, bei der aus den zum Differenzbildungsmittel übertragenen Signalen, auf die Art eines eventuell vorhandenen Fehlers geschlossen werden kann. Haben beide übertragene Signale beispielsweise den selben Wert, so deutet dies auf einen Ausfall des Sensors infolge Kurzschlusses hin. Außerdem kann die Unterbrechung einer der beiden Signalleitungen 310a bzw. 301b mit Hilfe des Wertes der zum Differenzbildungsmittel übertragenen Signale detektiert werden.

Zum anderen kann bei Detektion einer unterbrochenen Signalleitung (301a bzw. 301b), ersatzweise, mit eingeschränkter Meßsicherheit, das auf der anderen, intakten Signalleitung übertragene Signal zur Weiterverarbeitung herangezogen werden.

Als Sensorsignale, bei denen mit der erfindungsgemäßen Schaltungsanordnung eine Eliminierung der bei der Übertragung auf den Signalleitungen eingekoppelten Störsignale vorgenommen werden kann, können verschiedene Sensorsignale in Betracht kommen. So können dies Signale sein, die beispielsweise von Raddrehzahlsensoren, Beschleunigungssensoren, Gierratensensoren, Lenkwinkelsensoren, Drucksensoren oder Temperatursensoren erzeugt werden. Außerdem läßt sich die erfindungsgemäße Schaltungsanordnung bezüglich beliebiger Steuergeräte einsetzen.

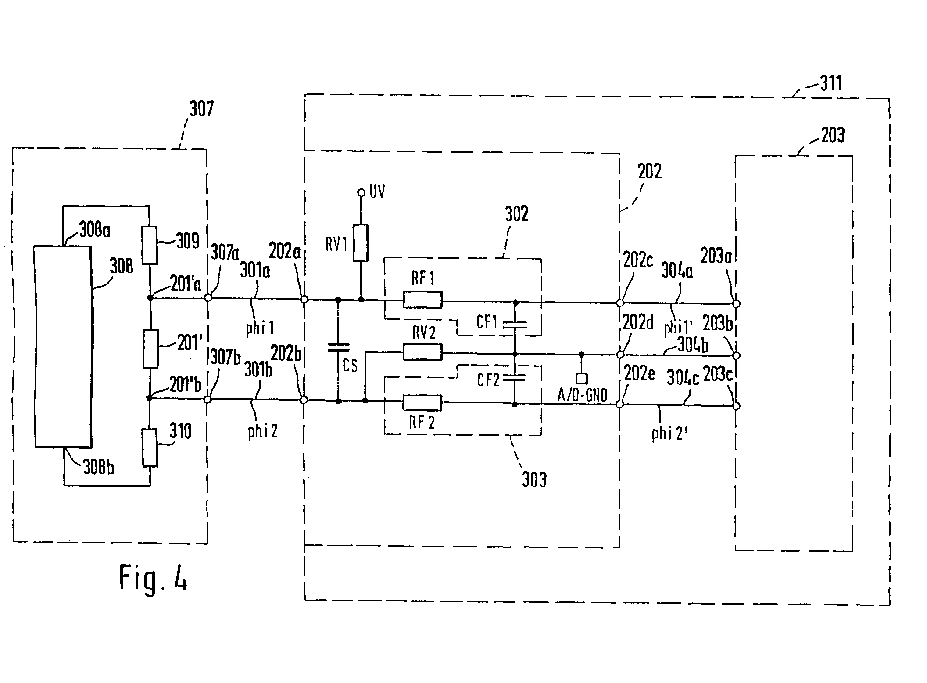

Außerdem kann die erfindungsgemäße Schaltungsanordnung nicht nur für die Eliminierung von bei der Übertragung von Sensorsignalen auf den Signalleitungen eingekoppelten Störsignalen eingesetzt werden. Vielmehr kann die erfindungsgemäße Schaltungsanordnung, wie das zweite Ausführungsbeispiel (Figur 4) zeigt, auch bei der Eliminierung von Störsignalen, die bei der Übertragung einer beliebigen Potentialdifferenz über Signalleitungen auf diesen eingekoppelt werden, eingesetzt werden.

### Zeichnung

Die Zeichnung besteht aus den Figuren 1 bis 5. Die Figuren 1 bis 3 zeigen jeweils Blockschaltbilder von verschiedenen Detailliertheitsgraden eines ersten Ausführungsbeispieles zur Beschreibung der Erfindung. In Figur 3 ist eine erfindungsgemäße Schaltungsanordnung des ersten Ausführungsbeispiels dargestellt. In Figur 4 ist eine weitere erfindungsgemäße Schaltungsanordnung für ein zweites Ausführungsbeispiel dargestellt. Figur 5 zeigt eine zum Stand der Technik gehörende Schaltungsanordnung.

In den Figuren sind identische Komponenten mit derselben Ziffer gekennzeichnet.

### Ausführungsbeispiel

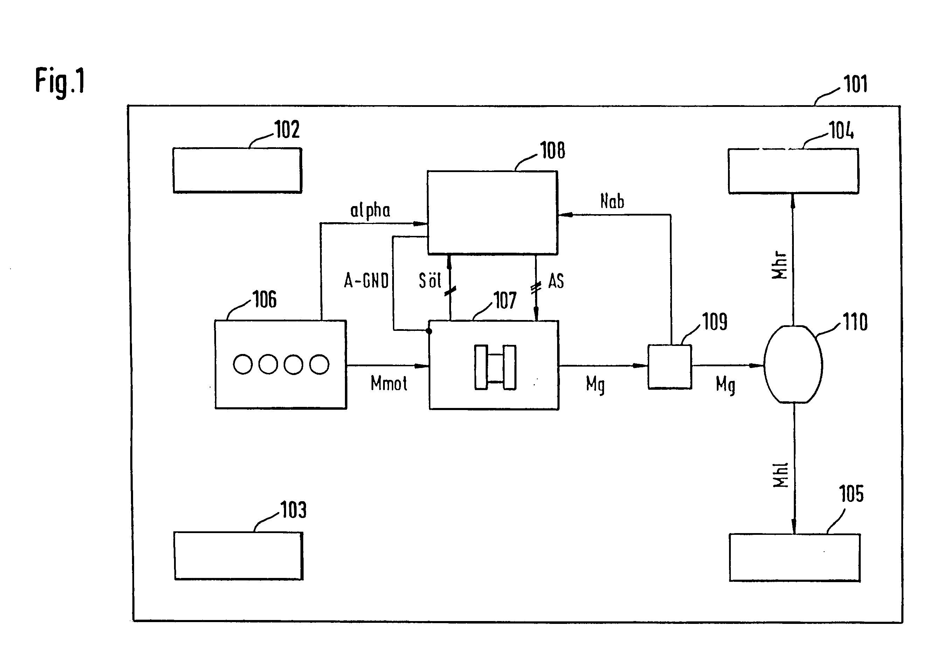

Die Erfindung soll nun zunächst anhand eines ersten Ausführungsbeispiels mit Hilfe der Figuren 1 bis 3 beschrieben werden.

In Figur 1 ist ein Fahrzeug 101, welches Vorderräder 102 bzw. 103, sowie angetriebene Hinterräder 104 bzw. 105 umfaßt, skizziert. Zum Antrieb der Hinterräder 104 bzw. 105 ist der Motor 106 vorgesehen. Dieser erzeugt das Antriebsmoment Mmot, welches dem Getriebe 107 zugeführt wird. Das Antriebsmoment Mmot wird mit Hilfe des Getriebes 107 in das Moment Mg umgesetzt, mit welchem das Differential 110 beaufschlagt wird. Mit Hilfe des Differentials 110 werden die beiden Momente Mhl bzw. Mhr bereitgestellt, mit denen die Hinterräder 105 bzw. 104 angetrieben werden.

Da als erstes Ausführungsbeispiel, anhand dessen die Erfindung beschrieben werden soll, die Messung der Temperatur des Öls im Getriebe im Rahmen der Getriebesteuerung besprochen werden soll, sind in Figur 1 weitere Komponenten, die für die Getriebesteuerung erforderlich sind, eingezeichnet.

Es handelt sich hierbei um das Steuergerät 108, mit dem die Steuerung des Getriebes 107 realisiert wird. Des weiteren ist eine Vorrichtung 109 eingezeichnet, mit der die Getriebeausgangsdrehzahl Nab erfaßt werden kann. Diese Getriebeausgangsdrehzahl Nab wird dem Steuergerät 108 neben einer lastabhängigen Größe alpha, die beispielsweise die Fahrpedalstellung und/oder den Drosselklappenwinkel kennzeichnet, als Eingangsgröße zugeführt. Zusätzlich werden dem Steuergerät 108 Signale Söl zugeführt, die die Temperatur des Öls im Getriebe beschreiben. Als Ausgangssignale gibt das Steuergerät 108 die Signale AS aus, mit deren Hilfe das Getriebe 107 gesteuert wird. Das Gehäuse des Getriebes 107 ist mit Hilfe der Leitung A-GND mit der Masse A-GND des Steuergerätes 108 verbunden. Dadurch ist das Gehäuse des Getriebes 107 geerdet.

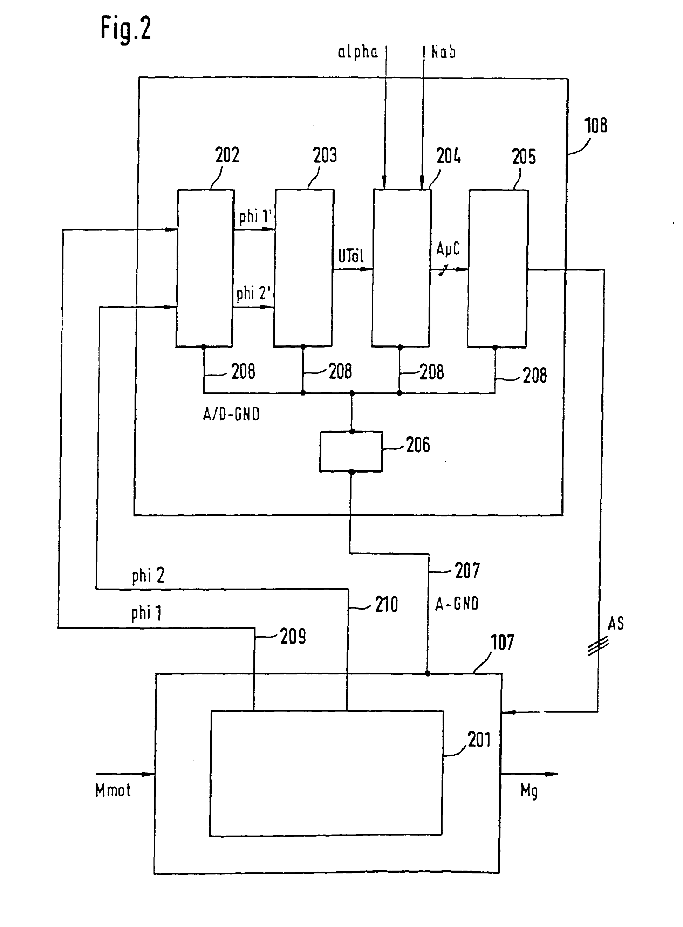

In Figur 2 sind die für die Erfindung wesentlichen Komponenten detaillierter dargestellt. Mit 107 ist das Getriebe gekennzeichnet, welches das vom Motor erzeugte Antriebsmoment Mmot in das Moment Mg umsetzt. Das Getriebe 107 enthält ein Sensormittel 201 zur Erfassung der Temperatur des Öles im Getriebe.

Das Steuergerät 108 enthält wenigstens die Komponenten Eingangsschaltung 202, Differenzbildungsmittel 203, Mikrocontroller 204, Ausgabeschaltung 205 und Netzfilter 206.

Das Gehäuse des Getriebes 107 ist durch die Leitung 207 mit dem Netzfilter 206 verbunden. Dadurch liegt das Gehäuse des Getriebes auf der Masse A-GND. Die Komponenten 202, 203, 204 und 205 des Steuergerätes 108 sind über die Leitung 208 ebenfalls mit dem Netzfilter 206 verbunden. Dadurch liegen sie auf der Masse A/D-GND. Das Netzfilter stellt sicher, daß die beiden Massen A-GND und A/D-GND weitestgehend voneinander entkoppelt sind.

Das Sensormittel 201 zur Erfassung der Temperatur des Öls im Getriebe 107 ist mittels der Signalleitungen 209 bzw. 210 mit der Eingangsschaltung 202 verbunden. Mit Hilfe der Signalleitung 209 wird das Signal phi1 und mit Hilfe der Signalleitung 210 das Signal phi2 vom Sensormittel 201 zur Eingangsschaltung 202 übertragen.

Die Eingangsschaltung 202 bildet aus dem Eingangssignal phi1 das Ausgangssignal phi1'. Ebenso bildet sie aus dem Eingangssignal phi2 das Ausgangssignal phi2'. Beide Signale phi1' bzw. phi2' sind Eingangssignale des Differenzbildungsmittels 203. Ausgehend von den beiden Eingangssignalen phi1' bzw. phi2' erzeugt das Differenzbildungsmittel 203 das Differenzsignal UTöl, welches ein direktes Maß für die Öltemperatur im Getriebe 107 ist.

Das Differenzbildungsmittel 203 kann auf verschiedene Arten realisiert sein. Beispielsweise kann es in der Form eines analogen Subtrahierverstärkers realisiert sein. Diesem werden die analogen Eingangssignale phi1' bzw. phi2' zugeführt. Ausgehend von diesen beiden Signalen bildet der analoge Subtrahierverstärker das analoge Differenzsignal UTöl. Dieses wird als Eingangssignal dem Mikrocontroller 204 zugeführt. Damit der Mikrocontroller 204 das analoge Eingangssignal UTöl verarbeiten kann, muß er dieses intern mit Hilfe eines A/D-Wandlers in ein entsprechendes digitales Signal umsetzen.

Andererseits kann das Differenzbildungsmittel 203 auch digital die Differenz aus den Eingangssignalen phi1' bzw. phi2' bilden. Hierzu müssen beide Eingangssignale phi1' bzw. phi2' vor der Verarbeitung im Differenzbildungsmittel 203 mit Hilfe jeweils eines A/D-Wandlers in digitale Signale umgesetzt werden. Unter Verwendung eines entsprechenden Subtrahieralgorithmusses bildet das Differenzbildungsmittel 203 das digitale Ausgangssignal UTöl. Dieses wird an den Mikrocontroller 204 als Eingangssignal weitergegeben. In diesem Fall ist eine A/D-Wandlung des Eingangssignals im Mikrocontroller 204 nicht erforderlich. Die für die vor der Verarbeitung im Differenzbildungsmittel 203 erforderlichen A/D-Wandler können entweder A/D-Wandler des Mikrocontrollers 204 oder diskrete A/D-Wandler sein.

In Abhängigkeit der Eingangssignale UTöl, alpha und Nab erzeugt der Mikrocontroller 204 Ausgangssignale AµC. Diese werden als Eingangssignale auf die Ausgabeschaltung 205 gegeben.

Im wesentlichen stellt die Ausgabeschaltung 205 eine Verstärkerschaltung dar, mit der die Eingangssignale AµC in die Ansteuersignale AS zur Steuerung des Getriebes umgesetzt werden. Die Ansteuersignale AS dienen der Ansteuerung von im Getriebe 107 befindlichen Aktuatoren, mit denen das Getriebe 107 beeinflußt wird.

Für eine weitere vorteilhafte Ausgestaltung des Ausführungsbeispieles ist es denkbar, unter Umständen die Signale phi1 bzw. phi2 und/oder phi1' bzw. phi2' und/oder UTöl vor ihrer jeweiligen Verarbeitung in den entsprechenden Einheiten unter Verwendung zusätzlicher Komponenten zu verstärken.

Die Figur 3 zeigt eine erfindungsgemäße Schaltungsanordnung, die im Rahmen der Getriebesteuerung zur Messung der Temperatur des Öles im Getriebe eingesetzt wird, und mit der die auf den Signalleitungen eingekoppelten Störsignale eliminiert werden.

Hierzu ist im Getriebe 107 ein Sensormittel 201 zur Erfassung der Temperatur eingefügt. Bei diesem Sensormittel 201 kann es sich beispielsweise um einen temperaturabhängigen Widerstand RS handeln, der seinen Widerstandswert in Abhängigkeit der Temperatur des Öles ändert. Der Anschluß 201a des Sensormittels 201 ist mit den am Getriebe 107 isoliert angebrachten Anschluß 107a verbunden. Entsprechend ist der Anschluß 201b des Sensormittels 201 mit dem ebenfalls am Gehäuse 107 isoliert angebrachten Anschluß 107b verbunden. Das Gehäuse des Getriebes 107 ist leitend mit der Masse A-GND verbunden.

Besonders vorteilhaft kann es sein, wenn die Anschlüsse 201a bzw. 201b des Sensormittels 201 jeweils über die Kondensatoren CE1 bzw. CE2 mit dem Gehäuse des Getriebes 107 verbunden sind. Hierzu wird der eine Anschluß des Kondensators CE1 mit dem Anschluß 201a des Sensormittels 201 verbunden. Der andere Anschluß des Kondensators CE1 wird mit dem Gehäuse des Getriebes 107 verbunden. Außerdem wird der eine Anschluß des Kondensators CE2 mit dem Anschluß 201b des Sensormittels 201 und der andere Anschluß des Kondensators CE2 mit dem Gehäuse des Getriebes 107 verbunden.

Da die Verbindung der beiden Anschlüsse 201a bzw. 201b des Sensormittels 201 über jeweils einen der beiden Kondensatoren CE1 bzw. CE2 an das Gehäuse des Getriebes 107 hinsichtlich der Umsetzung der Idee der Erfindung in eine erfindungsgemäße Schaltungsanordnung nicht zwingend erforderlich ist, sind die Verbindungen der beiden Kondensatoren CE1 bzw. CE2 zum Sensormittel 201 bzw. zum Gehäuse des Getriebes 107 durch gestrichelte Linien in Figur 3 gekennzeichnet.

Außerdem kann es ferner von Vorteil sein, wenn die beiden Kondensatoren CE1 bzw. CE2 nicht im Getriebe 107, sondern im Steuergerät 108, insbesondere in der Eingangsschaltung 202, untergebracht sind. Die Belegung der Anschlüsse der beiden Kondensatoren CE1 bzw. CE2 mit den Anschlüssen 201a bzw. 201b des Sensormittel 201 bzw. mit der Masse A-GND bleibt hierbei erhalten. Die Verbindung des Sensormittels 201 mit den beiden Kondensatoren CE1 bzw. CE2 muß in diesem Fall allerdings über die Signalleitungen 301a bzw. 301b realisiert werden. Außerdem müssen die beiden Kondensatoren CE1 bzw. CE2 im Steuergerät 108, insbesondere in der Eingangsschaltung 202, mit der Masse A-GND verbunden werden.

Der am Getriebe 107 angebrachte Anschluß 107a ist über die Signalleitung 301a mit dem Anschluß 202a der Eingangsschaltung 202 verbunden. Der Anschluß 107b des Getriebes 107 ist über die Signalleitung 301b mit dem Anschluß 202b der Eingangsschaltung 202 verbunden. Mit Hilfe der Signalleitung 301a wird das vom Sensormittel 201 erzeugte Signal phi1 vom Sensormittel 201, und somit vom Getriebe 107 zur Eingangsschaltung 202 übertragen. Entsprechend wird mit Hilfe der Signalleitung 301b das vom Sensormittel 201 erzeugte Signal phi2 zur Eingangsschaltung 202 übertragen.

Die Eingangsschaltung 202 enthält im wesentlichen die Bauelemente RV1, RV2, CS, sowie die Baueinheiten 302 bzw. 303.

Das Bauelement RV1 ist mit seinem einen Ende mit dem Anschluß 202a verbunden. An das andere Ende des Bauelementes RV1 ist eine Versorgungsspannung UV angeschlossen. Am Anschluß 202b ist mit seinem einen Ende das Bauelement RV2 angeschlossen. Das andere Ende des Bauelementes RV2 ist mit dem Anschluß 202d verbunden. Gleichzeitig ist der Anschluß 202d leitend mit der Masse A/D-GND verbunden.

Die Eingangsschaltung 202 enthält, gestrichelt gezeichnet, die beiden Baueinheiten 302 bzw. 303. Die Baueinheit 302 ist zwischen die Signalleitungen 301a bzw. 304a sowie 304b eingefügt. Die Baueinheit 303 ist zwischen die Signalleitungen 301b bzw. 304c sowie 304b eingefügt. Da beide Baueinheiten 302 bzw. 303 für die Umsetzung der Erfindungsidee in eine erfindungsgemäße Schaltungsanordnung nicht erforderlich sind, sind sie in Figur 3 gestrichelt dargestellt.

Beide Baueinheiten 302 bzw. 303 stellen bezüglich der Störsignale gleichwirkende Filter dar. In dem speziellen Ausführungsbeispiel sind die Baueinheiten 302 bzw. 303 als Tiefpaßfilter realisiert.

Die Baueinheit 302, das erste Tiefpaßfilter, besteht aus einem Bauelement RF1, dessen eines Ende mit dem Anschluß 202a verbunden ist. Das andere Ende des Bauelementes RF1 ist mit dem Anschluß 202c verbunden. Gleichzeitig ist dieses Ende des Bauelementes RF1 auch mit einem Ende des Kondensator CF1 verbunden. Das andere Ende des Kondensators CF1 ist mit dem Anschluß 202d verbunden.

Die Baueinheit 303, das zweite Tiefpaßfilter, besteht aus den Bauelementen RF2 bzw. CF2. Das Bauelement RF2 ist mit seinem einen Ende mit dem Anschluß 202b und mit seinem anderen Ende mit dem Anschluß 202e verbunden. Der Kondensator CF2 ist mit seinem einen Ende mit dem Anschluß 202e und mit seinem anderen Ende mit dem Anschluß 202d verbunden.

Üblicherweise werden als Bauelemente RF1 bzw. RF2 ohmsche Widerstände gewählt. Damit das erste bzw. das zweite Tiefpaßfilter bezüglich der Störsignale gleichwirkend ist, werden die Werte der beiden Bauelemente RF1 bzw. RF2 gleich gewählt. Ebenso haben in diesem Fall die beiden Kondensatoren CF1 bzw. CF2 die gleiche Kapazität.

Der Anschluß 202c der Eingangsschaltung 202 ist über die Signalleitung 304a mit dem Anschluß 203a des Differenzbildungsmittels 203 verbunden. Der Anschluß 202d der Eingangsschaltung 202 ist über die Signalleitung 304b mit dem Anschluß 203b des Differenzbildungsmittels 203 verbunden. Ebenso ist der Anschluß 202e der Eingangsschaltung 202 über die Signalleitung 304c mit dem Eingang 203c des Differenzbildungsmittels 203 verbunden.

Mit Hilfe der Signalleitung 304a wird das Ausgangssignal phi1' der Eingangsschaltung 202 zum Differenzbildungsmittel 203 übertragen. Das Ausgangssignal phi2' der Eingangsschaltung 202 wird über die Signalleitung 304c zum Differenzbildungsmittel 203 übertragen. Mit der Signalleitung 304b ist das Differenzbildungsmittel 203 mit der Masse A/D-GND verbunden.

Im Ausführungsbeispiel sind sowohl die Baueinheit 302, das erste Tiefpaßfilter, als auch die Baueinheit 303, das zweite Tiefpaßfilter, jeweils mittels eines Tiefpasses erster Ordnung realisiert. Es ist auch denkbar, Tiefpaßfilter einer höheren Ordnung einzusetzen. Neben dem im Ausführungsbeispiels gezeigten Tiefpaßfilter können selbstverständlich auch andere Filtermittel eingesetzt werden.

Für den Fall, daß die beiden Baueinheiten 302 bzw. 303 aufgrund von Bauelementetoleranzen nicht identisch aufgebaut sein sollten, ist es denkbar, unter Einspeisung ein- und desselben Signals auf den beiden Signalleitungen 301a bzw. 301b, mit Hilfe einer dem Differenzbildungsmittel 203 vorgeschalteten Korrekturschaltung, die Abweichung, die aufgrund des baulichen Unterschiedes der beiden Baueinheiten 302 bzw. 303 an diesem speziellen Eingangssignal erzeugt wird, zu bestimmen. Bei Kenntnis dieser Abweichung kann diese mit Hilfe des Korrekturmittels eliminiert und somit die baulichen Unterschiede der beiden Baueinheiten 302 bzw. 303 ausgeglichen werden.

Die durch die Baueinheiten 302 bzw. 303 realisierten Filter sind für die Umsetzung der Erfindungsidee in eine erfindungsgemäße Schaltungsanordnung nicht zwingend erforderlich. Aus diesem Grund können sie, müssen jedoch nicht, in der erfindungsgemäßen Schaltungsanordnung berücksichtigt werden.

Die Wahl der Bauelemente RV1 bzw. RV2, die Impedanzen sind, richtet sich nach der Art des Sensormittels 201. Handelt es sich bei dem Sensormittel 201 um einen Sensor, der seinen ohmschen Widerstand in Abhängigkeit der zu messenden physikalischen Größe ändert, so werden üblicherweise ohmsche Widerstände als Bauelemente RV1 bzw. RV2 gewählt. Handelt es sich bei dem Sensormittel 201 um einen Sensor, der seine Induktivität bzw. Kapazität in Abhängigkeit der zu messenden physikalischen Größe ändert, so werden üblicherweise Induktivitäten bzw. Kapazitäten als Bauelemente RV1 bzw. RV2 gewählt.

Die zu messende physikalische Größe kann beispielsweise eine Temperatur, ein Druck, eine Raddrehzahl oder eine Beschleunigung sein.

Anstelle des einzelnen Bauelementes RV1 bzw. des einzelnen Bauelementes RV2 kann auch jeweils ein aus mehreren Bauelementen bestehendes Netzwerk, in dem durch die Bauelemente Parallel- bzw. Serienschaltungen realisiert sind, eingesetzt werden.

Unter Umständen kann es vorteilhaft sein, wenn die beiden Bauelemente RV1 bzw. RV2 den gleichen Wert aufweisen. Somit ist der aus dem Bauelement RV1, dem Sensormittel 201 und dem Bauelement RV2 bestehende Spannungsteiler, symmetrisch aufgebaut. Dies kann eventuell für die Verarbeitung der beiden Signale phi1' bzw. phi2' im Differenzbildungsmittel 203 von Vorteil sein.

Falls es jedoch für eine Anordnung von Vorteil sein sollte, einen unsymmetrischen Spannungsteiler zu wählen, kann dies durch entsprechende Wahl der Bauelemente RV1 bzw. RV2 erreicht werden.

Die Anwendung der erfindungsgemäßen Schaltungsanordnung im Rahmen der Getriebesteuerung bei der Messung der Temperatur des Öls im Getriebe stellt keine Einschränkung der Verwendung dieser erfindungsgemäßen Schaltungsanordnung dar. Die erfindungsgemäße Schaltungsanordnung kann bezüglich jedes beliebigen Sensors eingesetzt werden. Beispielsweise können dies Lenkwinkelsensoren, Sensoren zur Erfassung der Radgeschwindigkeit, Gierratensensoren, Beschleunigungssensoren oder Drucksensoren sein. Die erfindungsgemäße Schaltungsanordnung kann sowohl bei passiven als auch für aktiven, z.B. stromerzeugenden Sensoren eingesetzt werden.

Der Einsatz der erfindungsgemäßen Schaltungsanordnung ist ebenfalls nicht auf den Einsatz bei der Getriebesteuerung beschränkt. Vielmehr kann sie bezüglich beliebiger Steuergeräte eingesetzt werden. So können dies z.B. Steuergeräte für die Motorsteuerung, Steuergeräte für Antiblockiersysteme, Steuergeräte für Antriebsschlupfregelsysteme oder Steuergeräte für die Fahrdynamikregelung sein.

Eine weitere vorteilhafte Ausgestaltung der erfindungsgemäßen Schaltungsanordnung ergibt sich, wenn am Eingang der Eingangsschaltung 202 an den Anschlüssen 202a bzw. 202b der Kondensator CS angeschlossen ist. Durch diesen Kondensator CS werden die beiden vom Sensormittel 201 erzeugten Signale phi1 bzw. phi2 gefiltert. Da dieser Kondensator CS für die Umsetzung der der Erfindung zugrundeliegenden Idee in eine Schaltungsanordnung nicht zwingend erforderlich ist, sind seine Anschlußverbindungen zu den Anschlüssen 202a bzw. 202b durch gestrichelte Linien gekennzeichnet.

Im folgenden soll ein zweites Ausführungsbeispiel aufgezeigt werden. Figur 4 zeigt eine erfindungsgemäße Schaltungsanordnung zu diesem zweiten Ausführungsbeispiel.

Bei der erfindungsgemäßen Schaltungsanordnung des zweiten Ausführungsbeispieles handelt es sich ebenfalls um eine Einrichtung, die in einem Kraftfahrzeug eingesetzt wird. Mit ihr können Störsignale, die bei der Übertragung einer beliebigen Potentialdifferenz mit Hilfe eines Signalleitungspaar auf diesem eingekoppelt werden, eliminiert werden. Eine zu übertragende Potentialdifferenz kann beispielsweise eine in einem proportionalen Verhältnis zur Ausgangsspannung einer Ausgangsschaltung eines Steuergerätes stehende Potentialdifferenz sein.

Wie Figur 4 zeigt, sollen mit der erfindungsgemäßen Schaltungsanordnung Störsignale eliminiert werden, die bei der Übertragung der Potentialdifferenz, unter Verwendung eines Signalleitungspaares, zwischen dem Steuergerät 307 und dem Steuergerät 311, auf diesem Signalleitungspaar eingekoppelt werden. Die Potentialdifferenz wird durch die beiden Signale phi1 bzw. phi2 beschrieben. Die beiden Signalleitungen 301a bzw. 301b bilden das Signalleitungspaar.

Hierzu ist an die Ausgangsschaltung 308 des Steuergerätes 307 der aus den Impedanzen 309, 201' sowie 310 bestehende Spannungsteiler angeschlossen. Das eine Ende der Impedanz 309 ist an den Anschluß 308a der Ausgangsschaltung 308 angeschlossen. Das andere Ende der Impedanz 309 ist zum einen mit dem Anschluß 307a des Steuergerätes 307 und zum anderen mit dem Anschluß 201'a der Impedanz 201' verbunden. Der Anschluß 201'b der Impedanz 201' ist gleichzeitig mit dem Anschluß 307b des Steuergerätes 307 und dem einen Ende der Impedanz 310 verbunden. Das andere Ende der Impedanz 310 ist an den Anschluß 308b der Ausgangsschaltung 308 angeschlossen.

Die Signalleitung 301a verbindet den Anschluß 307a des Steuergerätes 307 mit dem Anschluß 202a der Eingangsschaltung 202 des Steuergerätes 311. Mit Hilfe der Steuerleitung 301b wird der Ausgang 307b des Steuergerätes 307 mit dem Anschluß 202b der Eingangsschaltung 202 des Steuergerätes 311 verbunden.

Die Verarbeitung der beiden Signale phi1 bzw. phi2 in der Eingangsschaltung 202 entspricht der im ersten Ausführungsbeispiel beschriebenen.

Da es sich bei der mit Hilfe des Signalleitungspaares zu übertragenden Potentialdifferenz im zweiten Ausführungsbeispiel nicht um eine von einem Sensor erzeugte handelt, kann in der Eingangsschaltung 202 auf die Bauelemente RV1 bzw. RV2 sowie auf die Versorgungsspannung verzichtet werden. Sie können aber auch beibehalten werden, falls sich hierdurch eine vorteilhafte Ausgestaltung des zweiten Ausführungsbeispieles ergeben sollte. Dies ist in Figur 4 durch die gestrichelten Linien an den Anschlüssen der Bauelemente RV1 bzw. RV2 dargestellt.

Da die Ausgangsschaltung 308 des Steuergerätes 307 an seinen Anschlüssen 308a bzw. 308b eine Ausgangsspannung erzeugt, werden diese Anschlüsse als Spannungsanschlüsse bezeichnet. Die durch die Signale phi1 bzw. phi2 beschriebene Potentialdifferenz ist zu der von der Ausgangsschaltung 308 des Steuergerätes 307 erzeugten Ausgangsspannung proportional.

Bei der erfindungsgemäßen Schaltungsanordnung nach Figur 4 kann es durchaus auch vorteilhaft sein, die zwischen den Signalleitungen 301a bzw. 301b angeordnete Impedanz 201', statt im Steuergerät 307, auch im Steuergerät 311 anzuordnen.

Allgemein kann davon ausgegangen werden, daß die Erfindung eine Einrichtung in einem Kraftfahrzeug zur Übertragung einer Potentialdifferenz über wenigstens ein Signalleitungspaar betrifft. Die Potentialdifferenz kann dabei an einem Sensor oder an einer Impedanz abfallen. Der Sensor bzw. die Impedanz sind jeweils Teil eines Spannungsteilers zwischen Versorgungsspannungsanschlüssen bzw. Spannungsanschlüssen. An jedem Anschluß der Impedanz bzw. des Sensors ist eine Signalleitung angeschlossen. Das andere Ende der Signalleitungen ist auf ein Differenzbildungsmittel geführt.

## Patentansprüche

1. Einrichtung für ein Kraftfahrzeug zur Übertragung von mit Hilfe eines Sensors (201) erzeugten Signalen, welche eine physikalische Größe repräsentieren, und die auf einem Signalleitungspaar übertragen werden, wobei der zur Messung verwandte Sensor (201) mit mindestens je einer Impedanz (RV1, RV2) auf beiden Seiten des Sensors einen Spannungsteiler bildet, und wobei an einen ersten Anschluss (201a) des Sensors (201) eine erste Signalleitung (301a) und an einen zweiten Anschluss (201b) des Sensors eine zweite Signalleitung (301b) angeschlossen ist, **dadurch gekennzeichnet, dass**
- der Sensor (201) einen temperaturabhängigen Widerstand (RS) aufweist,
- das zweite Ende (304a) der ersten Signalleitung und das zweite Ende (304c) der zweiten Signalleitung auf ein Differenzbildungsmittel (203) geführt sind,
- welches Differenzbildungsmittel (203) zur Unterdrückung von während der Übertragung in das Signalleitungspaar eingekoppelten Störsignalen einen Differenzwert aus einem auf der ersten Signalleitung übertragenen ersten Signal (phi1') und einem auf der zweiten Signalleitung übertragenen zweiten Signal (phi2') bildet und den so gebildeten Differenzwert als Differenzsignal (UTöl) ausgibt,
- wobei das auf der ersten Signalleitung übertragene Signal (phi1') und das auf der zweiten Signalleitung übertragene Signal (phi2') vor der Verarbeitung im Differenzbildungsmittel (203) mit Hilfe jeweils eines A/D-Wandlers in digitale Signale umgesetzt werden und
- wobei der aus dem Sensor und den Impedanzen (RV1, RV2) gebildete Spannungsteiler das auf der ersten Signalleitung übertragene Signal (phi1') und das auf der zweiten Signalleitung übertragene Signal (phi2') zu Spannungswerten hin verschiebt, die entfernt vom Rand des Messbereichs des jeweiligen A/D-Wandlers liegen.

2. Einrichtung nach Anspruch 1, **dadurch gekennzeichnet, dass** in beiden Signalleitungen je ein für Störsignale gleichwirkendes Filter (302, 303) angeordnet ist.

3. Einrichtung nach Anspruch 2, **dadurch gekennzeichnet, dass** als Filter (302, 303) ein Tiefpassfilter vorgesehen ist.

4. Einrichtung nach Anspruch 1, **dadurch gekennzeichnet, dass** der Spannungsteiler unter Verwendung zweier Impedanzen (RV1, RV2) gleichen Impedanzwertes symmetrisch aufgebaut ist.

5. Einrichtung nach Anspruch 1, **dadurch gekennzeichnet, dass** als Differenzbildungsmittel (203) ein analoger Subtrahierer eingesetzt wird.

6. Einrichtung nach Anspruch 1, **dadurch gekennzeichnet, dass** dem Differenzbildungsmittel (203) Mittel zur Digitalisierung der auf den Signalleitungen übertragenen Signale (phil, phi 2) vorgeschaltet sind.

7. Einrichtung nach Anspruch 1, **dadurch gekennzeichnet, dass** der Sensor (201) in Abhängigkeit der zu messenden physikalischen Größe seinen ohmschen Widerstandswert ändert.

8. Einrichtung nach Anspruch 1, **dadurch gekennzeichnet, dass** der Sensor (201) in Abhängigkeit der zu messenden physikalischen Größe seinen kapazitiven und/oder induktiven Wert ändert.

9. Einrichtung nach Anspruch 1, **dadurch gekennzeichnet, dass** die Einrichtung im Rahmen der Messung der Öltemperatur bei einer Getriebesteuerung eingesetzt wird.

## Claims

1. Device for a motor vehicle for transmitting signals which are generated by means of a sensor (201), which represent a physical variable and which are transmitted on a signal line pair, the sensor (201) which is used for measurement forming, together with at least one impedor (RV1, RV2) on each of the two sides of the sensor, a voltage divider and a first signal line (301a) being connected to a first terminal (201a) of the sensor (201), and a second signal line (301b) being connected to a second terminal (201b) of the sensor, **characterized in that**
- the sensor (201) has a temperature-dependent resistor (RS),
- the second end (304a) of the first signal line and the second end (304c) of the second signal line are connected to a difference-forming means (203),
- which difference-forming means (203) forms, for the purpose of suppressing interference signals which are input into the signal line pair during the transmission, a differential value from a first signal (phi1') which is transmitted on the first signal line and a second signal (phi2') which is transmitted on the second signal line, and outputs the differential value formed in this way as a differential signal (UTöl),
- the signal (phi1') which is transmitted on the first signal line and the signal (phi2') which is transmitted on the second signal line being converted into digital signals by means of one A/D converter in each case, before the processing in the difference-forming means (203), and
- the voltage divider which is formed from the sensor and the impedors (RV1, RV2) moving the signal (phi1') which is transmitted on the first signal line and the signal (phi2') which is transmitted on the second signal line to voltage values which are remote from the edge of the measuring range of the respective A/D converter.

2. Device according to Claim 1, **characterized in that** one of the filters (302, 303) which have the same effect for interference signals is arranged in each of the two signal lines.

3. Device according to Claim 2, **characterized in that** a low-pass filter is provided as the filter (302, 303).

4. Device according to Claim 1, **characterized in that** the voltage divider is of symmetric design using two impedors (RV1, RV2) with the same impedance value.

5. Device according to Claim 1, **characterized in that** an analogue subtractor is used as the difference-forming means (203).

6. Device according to Claim 1, **characterized in that** means for digitizing the signals (phil, phi2) which are transmitted on the signal lines are connected upstream of the difference-forming means (203).

7. Device according to Claim 1, **characterized in that** the sensor (201) changes its ohmic resistance value as a function of the physical variable to be measured.

8. Device according to Claim 1, **characterized in that** the sensor (201) changes its capacitive and/or inductive value as a function of the physical variable to be measured.

9. Device according to Claim 1, **characterized in that** the device is used within the scope of the measurement of the oil temperature in a gearbox controller.

## Revendications

1. Dispositif dans un véhicule automobile pour la transmission de signaux produits à l'aide d'un capteur (201) représentant une grandeur physique et transmis par une paire de lignes de signalisation, le capteur (201) utilisé pour la mesure formant, avec au moins une impédance (RV1, RV2) située sur chacun de ses deux côtés, un diviseur de tension, avec une première ligne de signalisation (301 a) raccordée sur un premier branchement (201a) du capteur (201) et une seconde ligne de signalisation (301b) raccordée sur un second branchement (201b) du capteur (201),
**caractérisé en ce que**
- le capteur (201) présente une résistance (RS) dépendante de la température,
- la seconde extrémité (304a) de la première ligne de signalisation et la seconde extrémité (304c) de la seconde ligne de signalisation sont amenées sur un moyen de formation de différence (203),
- le moyen de formation de différence (203) forme, afin de supprimer des signaux parasites couplés dans la paire de lignes de signalisation au cours de la transmission, une valeur différentielle obtenue à partir d'un premier signal (phi1') transmis sur la première ligne de signalisation et d'un second signal (phi2') transmis sur la seconde ligne de signalisation et émet la valeur différentielle ainsi formée en tant que signal différentiel (UTö1),
- le premier signal (phi1') transmis sur la première ligne de signalisation et le second signal (phi2') transmis sur la seconde ligne de signalisation sont convertis, avant le traitement dans le moyen de formation de différence (203), en signaux numériques, chacun à l'aide d'un convertisseur analogique-numérique, et
- le diviseur de tension, formé à partir du capteur et des impédances (RV1, RV2), déplace le signal (phi1') transmis sur la première ligne de signalisation et le signal (phi2') transmis sur la seconde ligne de signalisation, vers des valeurs de tension éloignées du bord du domaine de mesure du convertisseur analogique-numérique correspondant.

2. Dispositif selon la revendication 1,
**caractérisé en ce qu'**
on dispose un filtre (302, 303) à action égalisatrice pour les signaux parasites dans chacune des deux lignes de signalisation.

3. Dispositif selon la revendication 2,
**caractérisé en ce qu'**
on prévoit un filtre passe-bas comme filtre (302, 303).

4. Dispositif selon la revendication 1,
**caractérisé en ce que**
le diviseur de tension est construit de manière symétrique en utilisant deux impédances (RV1, RV2) de même valeur d'impédance.

5. Dispositif selon la revendication 1,
**caractérisé en ce qu'**
on utilise un soustracteur analogique comme moyen de formation de différence (203).

6. Dispositif selon la revendication 1,
**caractérisé en ce qu'**
on place des moyens de numérisation des signaux (phi1, phi 2) transmis sur les lignes de signalisation en amont du moyen de formation de différence (203).

7. Dispositif selon la revendication 1,
**caractérisé en ce que**
le capteur (201) modifie sa résistance ohmique en fonction de la grandeur physique à mesurer.

8. Dispositif selon la revendication 1,
**caractérisé en ce que**
le capteur (201) modifie sa valeur capacitive et/ou inductive en fonction de la grandeur physique à mesurer.

9. Dispositif selon la revendication 1,
**caractérisé en ce que**
ce dispositif est utilisé pour une commande de transmission dans le cadre de la mesure de la température de l'huile.
